# EUROPÄISCHE PATENTSCHRIFT

(11) **EP 3 694 908 B1**
(45) Veröffentlichungstag und Bekanntmachung des Hinweises auf die Patenterteilung: **08.12.2021**
(21) Anmeldenummer: 18780144.4
(22) Anmeldetag: 08.10.2018
(51) Int. Cl.: B01D 69/02, B01D 69/14, B01D 71/02, A41D 31/102, C08J 5/18, B01D 65/00, B01D 71/54

(54) **FUNKTIONSARTIKEL AUS EINER WASSERDICHTEN ATMUNGSAKTIVEN POLYMER-MEMBRAN**
FUNCTIONAL ITEM MADE FROM A WATERPROOF BREATHABLE POLYMER MEMBRANE
ARTICLE FONCTIONNEL OBTENU À PARTIR D'UNE MEMBRANE EN POLYMÈRE ÉTANCHE À L'EAU ET PERMÉABLE À L'AIR

(30) Priorität: 10.10.2017 EP 17195797
(43) Veröffentlichungstag der Anmeldung: 19.08.2020
(73) Patentinhaber: BASF SE, 67056 Ludwigshafen am Rhein (DE)
(72) Erfinder: AHLERS, Juergen, 67056 Ludwigshafen am Rhein (DE); PRISSOK, Frank, 49448 Lemfoerde (DE); GRONWALD, Oliver, 67056 Ludwigshafen am Rhein (DE); WEBER, Martin, 67056 Ludwigshafen am Rhein (DE)
(74) Vertreter: BASF IP Association
(86) Internationale Anmeldenummer: PCT/EP2018/077298
(87) Internationale Veröffentlichungsnummer: WO 2019/072755

(56) Entgegenhaltungen:
- WO-A1-94/02526
- WO-A1-95/33007
- WO-A1-2009/108678
- WO-A1-2017/121893

## Beschreibung

Die vorliegende Erfindung betrifft einen Funktionsartikel umfassend eine wasserdichte atmungsaktive Polymer-Membran, wobei der Funktionsartikel keine Gewebeschicht aufweist.

Funktionsartikel, insbesondere Funktionsbekleidung für diverse Anwendungsbereiche, beispielsweise für den Sport- und Outdoor-Bereich, ist in diversen Varianten bekannt. Langjährig in der Anwendung sind beispielsweise die so genannten Öljacken, welche aus einem Gewebe bestehen, welches mit PVC oder PU beschichtet ist. Diese Öljacken sind nicht elastisch und weisen keinerlei Durchlässigkeit für Wasserdampf auf, was das Tragen unkomfortabel gestaltet. Ebenfalls bekannt ist die Verwendung von Membranlaminaten, welche in der Regel aus einer Tragschicht, der Membran und einer strapazierfähigen Deckschicht bestehen. Die Herstellung solcher Funktionsartikel aus Membranlaminaten erfolgt in der Regel durch Vernähen von Laminatsegmenten und Verkleben der Naht mit einem wasserdichten Tape. Problematisch hierbei ist, dass die Nahtstiche das Material der funktionalen Schicht wasserdurchlässig werden lassen. Daher muss die Wasserbeständigkeit üblicherweise anschließend durch Versiegeln der Naht mit einem darüber liegenden Adhäsiv oder einem Dichtungsband hergestellt werden. Besonders nachteilig ist weiterhin, dass die äußere Laminatschicht mit PFC haltigen Dispersionen hydrophobiert werden, um Wassereintritt zu reduzieren und ein Nässegefühl sowie einen Gewichtsanstieg bei Regen zu vermeiden. Wasserfeste, atmungsaktive Bekleidung und Schuhe enthalten oftmals als funktionale Schicht expandiertes Polytetrafluorethylen (ePTFE) in Form von Membranen. Der Einsatz von halogenhaltigen ePTFE ist bereits aus Gründen des Umweltschutzes bedenklich. Problematisch bei nicht-thermoplastischen Materialien ist weiterhin, dass auch hier meist ein Verkleben der funktionalen Schicht auf das Trägermaterial und /oder die Deckschicht erforderlich ist. Insgesamt sind Membranlaminate in der Regel nicht elastisch, aufwändig und teuer in der Herstellung, haben im Nichtgebrauch allerdings sehr große Packmasse und sind schwer zu recyceln.

In Laufe der Jahre hat sich für Funktionsbekleidung, insbesondere für Sport- und Outdoor-Anwendungen der Anspruch entwickelt, dass diese wasserdicht für von außen auftreffendes Wasser und winddicht sein soll, trotzdem aber komfortabel im Hinblick auf die Abführung von Schweiß (durchlässig für Wasserdampf von innen) und leicht handhabbar sein soll, beispielsweise für den Transport klein und leicht zusammenlegbar sein soll.

Aufgabe der vorliegenden Erfindung war es, einen Funktionsartikel und ein Verfahren zu dessen Herstellung bereitzustellen, welches die oben genannten Nachteile überwindet. Insbesondere sollte ein Funktionsartikel bereitgestellt werden, welches neben guter Wasserdichtigkeit (LEP) und Wasserdampfdurchlässigkeit (WDD) trotzdem gute mechanische Eigenschaften aufweist, kein mehrschichtiges Laminat erfordert und leicht in der Handhabung ist.

Erfindungsgemäß wurde diese Aufgabe gelöst mit einem Funktionsartikel umfassend eine wasserdichte atmungsaktive Polymer-Membran, wobei der Funktionsartikel keine weitere Schicht aufweist, beispielsweise keine Substrat-, Gewebe-, Vlies- oder weitere Polymer-Schicht. In einer bevorzugten Ausführungsform besteht der Funktionsartikel zu 80 Gewichts-%, bevorzugt zu 85 Gewichts-%, weiter bevorzugt zu 90 Gewichts-%, weiter bevorzugt zu 95 Gewichts-%, weiter bevorzugt zu 99,5 Gewichts-% aus der wasserdichten atmungsaktiven Polymer-Membran, d.h. es sind keine weiteren Schichten gleich welcher Art vorhanden. Die zu 100 Gewichts-% jeweils verbleibenden Gewichts-% enthalten keine weitere(n) Schicht(en), sondern ergänzende Bestandteile wie beispielsweise Aufnäher, Aufkleber oder Reißverschlüsse. In einer weiter bevorzugten Ausführungsform besteht der Funktionsartikel (ausschließlich) aus der wasserdichten atmungsaktiven Polymer-Membran, d.h. es sind keine weiteren Schichten gleich welcher Art vorhanden.

Überraschenderweise hat es sich gezeigt, dass bei den erfindungsgemäßen Polymer-Membranen ohne weitere Schicht eine ausreichende Reißdehnung (>100%) vorhanden ist. Weiterhin liegt der Spannungswert der erfindungsgemäßen Polymer-Membranen ohne weitere Schicht bei 100% Dehnung unterhalb von 250kPa, bei 200% Dehnung unterhalb von 500kPa, bestimmt gemäß DIN 53504-S2. Diese Reißdehnung und auch der Spannungswert erlauben es, bei der Polymer-Membran auf weitere Schichten, beispielsweise Gewebeschichten, zu verzichten und ermöglichen einschichtige Funktionsartikel. Die Wasserdampfdurchlässigkeit (WDD bei 38°C und 90% Luftfeuchtigkeit) beträgt mindestens 1000g/m^{2*}d, die Wasserdichtigkeit (LEP) ist für alle Polymer-Membranen größer als 1 bar, wodurch die Anforderung an den Tragekomfort erfüllt werden. Der einschichtige Aufbau erlaubt es weiterhin, dass der entsprechende Funktionsartikel leicht ist und auf ein geringes Packmaß beim Zusammenlegen komprimiert werden kann.

Im Kontext der vorliegenden Erfindung wird unter einer Membran eine dünne, semipermeable Struktur verstanden, welche in der Lage ist, zwei Flüssigkeiten oder molekulare und/oder ionische Komponenten oder Partikel von einer Flüssigkeit oder einem Gas zu trennen. Eine Membran agiert als selektive Barriere, welche einigen Partikel, Substanzen oder Chemikalien den Durchtritt erlaubt, während andere zurückgehalten werden. Beispielsweise kann eine Membran eine Umkehrosmosemembran (reverse osmosis (RO)), eine Vorwärtsosmosemembran (forward osmosis (FO)) Nanofiltrationsmembran (NF), Ultrafiltrationsmembran (UF), oder eine Mikrofiltrationsmembran (MF) sein.

Erfindungsgemäß umfasst der Funktionsartikel eine wasserdichte atmungsaktive Polymer-Membran, wobei der Funktionsartikel keine weitere Schicht, beispielsweise keine Gewebeschicht, aufweist. In einer weiter bevorzugten Ausführungsform besteht der Funktionsartikel zu 80 Gewichts-%, bevorzugt zu 85 Gewichts-%, weiter bevorzugt zu 90 Gewichts-%, weiter bevorzugt zu 95 Gewichts-%, weiter bevorzugt zu 99,5 Gewichts-% aus der wasserdichten atmungsaktiven Polymer-Membran, d.h. es sind keine weiteren Schichten gleich welcher Art vorhanden. Die zu 100 Gewichts-% jeweils verbleibenden Gewichts-% enthalten keine weitere(n) Schicht(en), sondern ergänzende Bestandteile wie beispielsweise Aufnäher, Aufkleber oder Reißverschlüsse. Gemäß einer weiter bevorzugten Ausführungsform besteht der Funktionsartikel aus der wasserdichten atmungsaktiven Polymer-Membran. Gemäß einer weiteren bevorzugten Ausführungsform weist der Funktionsartikel keine Stichnaht auf.

Wie oben bereits erwähnt weist die Polymer-Membran gemäß einer bevorzugten Ausführungsformen des Funktionsartikels eine Reißdehnung größer 100%, bevorzugt größer 150%, weiter bevorzugt größer 200%, gemessen nach DIN 53504, auf. Gemäß einer weiteren bevorzugten Ausführungsform des Funktionsartikels weist die Polymer-Membran eine absolute Wasserdampfdurchlässigkeit (WDD_{abs}.) bei 38 °C und 90 % relativer Luftfeuchtigkeit entsprechend DIN 53122 größer als 1000 [g/m^{2*}d] auf. Die Polymer-Membran des Funktionsartikels weist bevorzugt eine Wasserdichtigkeit (LEP) größer als 1 bar, bevorzugt im Bereich von 2 bis 5 bar, weiter bevorzugt im Bereich von 3 bis 4 bar, auf, bestimmt nach DIN EN 20811.

Bevorzugt weist die Polymer-Membran des Funktionsartikels eine mittlere Dicke im Bereich von 5 bis 500 µm, bevorzugt im Bereich von 10 bis 200 µm, weiter bevorzugt von 20 bis 200 µm, auf. Die Polymer-Membran des Funktionsartikels weist ― wie oben bereits erwähnt ― bevorzugt einen Spannungswert bei 100% Dehnung unterhalb von 250kPa, bei 200% Dehnung unterhalb von 500kPa, bestimmt gemäß DIN 53504-S2, auf.

Der erfindungsgemäße Funktionsartikel umfasst eine wasserdichte atmungsaktive Polymer-Membran, wobei der Funktionsartikel aus der wasserdichten atmungsaktiven Polymer-Membran besteht und wobei der Funktionsartikel keine weitere Schicht aufweist; wobei der Funktionsartikel ausgewählt ist aus der Gruppe bestehend aus Funktionsbekleidungsstück; Funktionsschuh; Funktionsgegenstand, ausgewählt aus der Gruppe bestehend aus Tasche, Rucksack oder Zelt; Badebekleidungsstück; und Bekleidung für Wassersport, wobei die Polymer-Membran eine Reißdehnung größer 100% gemessen nach DIN 53504 aufweist; wobei die Polymer-Membran aus einer Lösung (L1) umfassend zumindest ein thermoplastisches Polymer und mindestens ein Additiv, ausgewählt aus der Gruppe bestehend aus mono-, di- und Trialkanolen, welche keine weiteren funktionalen Gruppen aufweisen, mittels Ausbilden eines Films aus der Lösung (L1) und Kontaktieren des Films mit einer Mischung (L2) umfassend ein Koagulanz ausgewählt aus der Gruppe von flüssigem Wasser, Wasserdampf, Alkoholen oder Mischungen hiervon, erzeugt ist und Poren mit einem mittleren Porendurchmesser im Bereich von 0,001 µm bis 0,8 µm, bestimmt mittels Hg-Porosimetrie gemäß DIN 66133, aufweist; und wobei die Polymer-Membran mindestens ein thermoplastisches Polymer ausgewählt aus der Gruppe bestehend aus Polyurethan, Polyester, Polyetherester, Polyesterester, Polyamid, Polyetheramid, Polybutadienstyrol und Ethylenvinylacetat umfasst. Die Polymer-Membran des Funktionsartikels umfasst gemäß einer bevorzugten Ausführungsform mindestens ein thermoplastisches Polymer, welches bevorzugt ausgewählt ist aus der Gruppe bestehend thermoplastischem Polyurethan (TPU); Polyamid, insbesondere Polyamid 11 (PA11), Polyamid 12 (PA12), Polyamid 6-636 (PA6-636) und Polyamid-Copolymer; und Polyester, insbesondere biologisch abbaubarem Polyester (Ecoflex), bevorzugt TPU.

Gemäß einer besonders bevorzugten Ausführungsform des Funktionsartikels umfasst die Polymer-Membran mindestens ein TPU, wobei das TPU auf den folgenden Komponenten basiert:
- 11 bis 79 Gewichts-% einer Mischung aus mindestens einem Diol (D1) und mindestens einem Isocyanat (I1),
- 21 bis 89 % Gewichts-% mindestens einer Verbindung (C1) aufweisend mindestens zwei gegenüber Isocyanat reaktiven Gruppen.

Die Erfindung betrifft daher in einem Aspekt einen Funktionsartikel umfassen eine wasserdichte atmungsaktive Polymer-Membran, wobei der Funktionsartikel keine weitere Schicht, beispielsweise keine Gewebeschicht, aufweist und wobei die Polymer-Membran mindestens ein TPU umfasst, wobei das TPU auf den folgenden Komponenten basiert:
- 11 bis 79 Gewichts-% einer Mischung aus mindestens einem Diol (D1) und mindestens einem Isocyanat (I1),
- 21 bis 89 % Gewichts-% mindestens einer Verbindung (C1) aufweisend mindestens zwei gegenüber Isocyanat reaktiven Gruppen.

Bevorzugt basiert das TPU auf den folgenden Komponenten:
- 15 bis 75 Gewichts-% einer Mischung aus mindestens einem Diol (D1) und mindestens einem Isocyanat (I1),
- 25 bis 85 Gewichts-% mindestens einer Verbindung (C1) aufweisend mindestens zwei gegenüber Isocyanat reaktiven Gruppen;
weiter bevorzugt basiert das TPU auf den folgenden Komponenten:
- 20 bis 75 Gewichts-% einer Mischung aus mindestens einem Diol (D1) und mindestens einem Isocyanat (I1),
- 25 bis 80 Gewichts-% mindestens einer Verbindung (C1) aufweisend mindestens zwei gegenüber Isocyanat reaktiven Gruppen.

Das molare Verhältnis des mindestens einen Diols (D1) zum mindestens einen Isocyanat (I1) liegt üblicherweise im Bereich von 1:3 bis 3:1. Bevorzugt liegt das molare Verhältnis des mindestens einen Diols (D1) zum mindestens einen Isocyanat (I1) im Bereich von1:1 bis 1:2, bevorzugt im Bereich von 1:1,2 bis 1:1,8, weiter bevorzugt im Bereich von 1:1,4 bis 1:1,6.

Die mindestens eine Verbindung (C1) kann jedwede Verbindung mit mindestens zwei gegenüber Isocyanat reaktiven Gruppen sein. Bevorzugt sind die gegenüber Isocyanat reaktiven Gruppen Hydroxy- oder Amino-Gruppen. Die mindestens eine Verbindung (C1) kann zur Modifikation der Eigenschaften des TPUs zugesetzt werden. Jedwede Verbindung kann verwendet werden, solange sie geeignet ist, ein thermoplastisches Polyurethan, mit der Mischung aus dem mindestens einen Diol (D1) und dem mindestens einen Isocyanat (I1) zu ergeben. Beispielsweise kann die mindestens eine Verbindung (C1) ein Polyol sein, aber auch ein Polymer mit mindestens zwei Hydroxygruppen oder mindestens zwei Aminogruppen anders als ein Polyol, beispielsweise ein hydrophobes Polymer oder Oligomer umfassend Silizium.

Gemäß einer bevorzugten Ausführungsform des Funktionsartikels ist die mindestens eine Verbindung (C1) aufweisend mindestens zwei gegenüber Isocyanat reaktiven Gruppen ein Polyol, bevorzugt ausgewählt aus der Gruppe bestehend aus Polyesterpolyol und Polyetherpolyol. Hier sind alle geeigneten Polyole einsetzbar, beispielsweise Polyetherdiole oder Polyesterdiole, oder Mischungen von zwei oder mehr davon. Geeignete Polyetherpolyole oder ―diole sind beispielsweise Polyetherdiole basierend auf Ethylenoxid oder Propylenoxid oder deren Mischungen, beispielsweise Copolymere wie Blockcopolymere. Weiterhin kann jedes geeignete Polyesterdiol eingesetzt werden, wobei Polyesterdiol hier auch Polycarbonatdiole umfasst.

Das mindestens eine Isocyanat (I1) ist bevorzugt mindestens ein Polyisocyanat (I1). Als Polyisocyanat (I1) können aliphatische, cycloaliphatische, araliphatische und/oder aromatische Diisocyanate eingesetzt werden. Beispielhaft zu nennen sind die folgenden aromatischen Isocyanate: 2,4-Toluol-diisocyanat, Mischungen aus 2,4- und 2,6-Toluoldiisocyanat, 4,4'-, 2,4'-und/oder 2,2'-Diphenylmethandiisocyanat (MDI), Mischungen aus 2,4'- und 4,4'-Diphenylmethandiisocyanat, urethan-modifiziertes flüssiges 4,4'- und/oder 2,4-Diphenylmethandiisocyanat, 4,4'-Diisocyanatodiphenylethan, Mischungen aus monomeren Methandiphenyldiisocyanaten und weiteren hoch polycyclischen Homologen von Methandiphenyldiisocyanat (polymeres MDI), 1,2- und 1,5-Naphthylendiisocyanat.

Aliphatische Diisocyanate sind übliche aliphatische und/oder cycloaliphatische Diisocyanate, beispielsweise tri-, tetra-, penta-, hexa-, hepta- und/oder Octamethylendiisocyanat, 2-Methylpentamethylen-1,5-diisocyanat, 2-Ethylbutylen-1,4-diisocyanat, 1-Isocyanato-3,3,5-trimethyl-5-isocyanatomethylcyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4-und/oder -2,6-cyclohexandiisocyanat, 4,4'-, 2,4'- und/oder 2,2'-Dicyclohexylmethandiisocyanat (H12MDI).

Gemäß einer bevorzugten Ausführungsform des Funktionsartikels ist das mindestens eine Isocyanat (I1) ein Polyisocyanat, ausgewählt aus der Gruppe bestehend aus Diphenylmethandiisocyanat (MDI), Toluoldiisocyanat (TDI), und Hexamethylendiisocyanat (HDI), Dicyclohexylmethan-4,4'-diisocyanat (H12MDI), bevorzugt mindestens MDI.

Das Polyisocyanat kann rein oder in Form einer Zusammensetzung, beispielsweise als Isocyanatprepolymer eingesetzt werden. Weiterhin kann eine Mischung umfassend Polyisocyanat und mindestens ein Lösungsmittel, eingesetzt werden, wobei geeignete Lösungsmittel dem Fachmann bekannt sind.

Polyisocyanatprepolymere sind erhältlich mittels Reaktion der oben beschriebenen Polyisocyanate im Überschuss, beispielsweise bei Temperaturen im Bereich von 30 bis 100°C, bevorzugt bei mehr als 80°C, mit Polyolen unter Erhalt des Prepolymers. Für die Herstellung des Prepolymers werden bevorzugt Polyisocyanate und kommerziell erhältliche Polyole basierend auf Polyestern eingesetzt, ausgehend beispielsweise von Adipinsäure, oder auf Polyethern, ausgehend beispielsweise von Tetrahydrofuran, Ethylenoxid und/oder Propylenoxid. Polyole sind dem Fachmann bekannt und beispielsweise beschrieben in "Kunststoffhandbuch, 7, Polyurethane", Carl Hanser Verlag, 3. Auflage 1993, Sektion 3.1. Polyole welche bevorzugt eingesetzt werden sind polymere Verbindungen die Wasserstoffatome aufweisen, welche reaktiv gegenüber Isocyanaten sind. Besonders bevorzugte Polyole sind Polyetherpolyole.

In der Herstellung der Polyisocyanatprepolymere können übliche Kettenverlängerer oder Vernetzungsmittel optional den Polyolen zugesetzt werden. Bevorzugte Kettenverlängerer sind Ethandiol, Butandiol, Hexandiol und Monoethylenglykol, weiter bevorzugt mindestens 1,4-Butandiol oder Monoethylenglykol. In diesem Fall ist das Verhältnis der organischen Polyisocyanate zu Polyolen und Kettenverlängerer vorzugsweise so gewählt, dass das Isocyanatprepolymer einen NCO-Gehalt im Bereich von 2% bis 30%, weiter bevorzugt im Bereich von 6% bis 28%, weiter bevorzugt im Bereich von 10% bis 24%, aufweist.

Als Diol (D1) kann generell jedwedes Diol eingesetzt werden. Diol (D1) ist bevorzugt ausgewählt aus der Gruppe bestehend aus aliphatischen, araliphatischen, aromatischen, und/oder cycloaliphatischen Verbindungen mit einem Molgewicht im Bereich von 0,05 kg/mol bis 0,499 kg/mol, bevorzugt difunktionale Verbindungen, beispielsweise Diamine und/oder Alkandiole mit 2 bis 10 Kohlenstoffatomen im Alkylenteil, di-, tri-, tetra-, penta-, hexa-, hepta-, octa-, nona-, und/oder Decaalkylenglykole aufweisend von 3 bis 8 Kohlenstoffatome, insbesondere Ethylen-1,2-glykol, 1,3-Propandiol, 1,4-Butandiol, 1,6-Hexandiol, und bevorzugt korrespondierende oligo- und/oder Polypropylenglykole wie Diethylenglykol, Dipropylenglykol, 1,4-Cyclohexandiol, 1,4-Dimethanolcyclohexan, und Neopentylglykol, und es ist also möglich Mischungen zu verwenden. Bevorzugt weisen die Diole nur primäre Hydroxygruppen auf, wobei besonders bevorzugt Ethandiol, Butandiol, Hexandiol und/oder Monoethylenglykol sind.

Gemäß einer bevorzugten Ausführungsform des Funktionsartikels ist das mindestens eine Diol (D1) ausgewählt aus der Gruppe bestehend aus Ethandiol, Butandiol, Hexandiol und Monoethylenglykol, und umfasst bevorzugt mindestens 1,4-Butandiol oder Monoethylenglykol.

In der Herstellung des Polymers, insbesondere des TPUs, können weitere Verbindungen wie beispielsweise Katalysatoren, und/oder übliche Hilfsstoffe und/oder Additive eingesetzt werden. Übliche Hilfsstoffe sind beispielsweise oberflächenaktive Substanzen, Füllstoffe, Flammhemmer, Nukleirungsmittel, Oxidationsstabilisatoren, Schmiermittel und Mold-release-Hilfen, Farbstoffe, Pigmente und optional Stabilisatoren, z.B. zum Schutz gegen Hydrolyse, Licht, Hitze oder Entfärbung, anorganische und/oder organische Füllstoffe, Verstärkungsmittel und Weichmacher. Übliche Hilfsstoffe und Additive können beispielhaft dem "Kunststoffhandbuch" entnommen werden ("Kunststoffhandbuch"; 7, "Polyurethane", Carl Hanser Verlag, 1. Auflage 1966, Seiten 103-113).

Füllstoffe umfassen anorganische Füllstoffe, organische Füllstoffe und Mischungen von anorganischen und organischen Füllstoffen. Unter anorganischen und/oder organischen Füllstoffen werden solche bevorzugt, die durch ihre Einbringung die Herstellung, die Eigenschaften oder den Preis der Polymere bzw. Produkte positiv beeinflussen. Als Füllstoffe, insbesondere verstärkend wirkende Füllstoffe, sind die an sich bekannten, üblichen organischen und/oder anorganischen Füllstoffe zu verstehen, wobei der Ausdruck "Füllstoff" teilchenförmige Füllstoffe und Fasern umfasst. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Zeolithe, Metalloxide, wie Kaolin, Aluminiumoxide, Titanoxide und Eisenoxide, Metallsalze wie Kreide, Carbonate und anorganische Pigmente, wie Titandioxid oder Zinksulfid, sowie Gläser und andere. Vorzugsweise verwendet werden Kaolin (China Clay), Aluminiumsilikat und Copräzipitate mit Aluminiumsilikat sowie natürliche und synthetische faserförmige Mineralien. Als organische Füllstoffe kommen beispielsweise in Betracht: Kohlenstoff, Melamin, Kollophonium, Cyclopentadienylharze und Pfropfpolymerisate sowie organische Fasern, insbesondere Kohlenstofffasern, Cellulosefasern, Polyethylen-, Polypropylen-, Polyamid-, Polyacrylnitril-, Polyesterfasern auf der Grundlage von aromatischen und/oder aliphatischen Dicarbonsäureestern, Polyurethanfasern, sowie Mischungen von zwei oder mehr dieser Fasern, insbesondere mindestens Polyurethanfasern. Die Fasern haben bevorzugt ein Längen- zu Dickenverhältnis von mindestens 10:1, weiter bevorzugt mindestens von 20:1. Die Fasern können als Kurzschnitt, Schnittfasern, Langfasern, Wirrfasern oder Mischungen von zwei oder mehr dieser Faserformen eingebracht werden.Die anorganischen und /oder organischen Füllstoffe oder Fasern können einzeln oder als Gemische verwendet werden und werden dem Polymer vorteilhafterweise in Mengen von 0 bis 30 Gew.%, bevorzugt 2 bis 15 Gew.%, bezogen auf das Gewicht der aller Komponenten des Polymers zugesetzt.

Gemäß einer besonders bevorzugten Ausführungsform des Funktionsartikels weist die Polymer-Membran nur ein thermoplastischen Polymer, bevorzugt nur ein TPU, auf.

Die Polymer-Membran weist Poren mit einem mittleren Porendurchmesser im Bereich von 0,001 µm bis 0,8 µm, bestimmt mittels Hg-Porosimetrie gemäß DIN 66133, auf. Die Polymer-Membranen werden aus einer Lösung (L1) umfassend zumindest ein thermoplastisches Polymer (P1) mittels Phaseninversion, insbesondere mittels Ausbilden eines Films aus der Lösung (L1) und Kontaktieren des Films mit einer Mischung (L2) wie nachstehend zum Verfahren noch beschrieben erzeugt.

Gemäß einer weiteren bevorzugten Ausführungsform des Funktionsartikels umfasst das thermoplastische Polymer der Polymer-Membran weiterhin mindestens ein poröses Metall-organisches Gerüstmaterial, wobei die Polymer-Membran besonders bevorzugt eine Bruchdehnung >100% aufweist. Soweit nicht anders angegeben wird im Rahmen der vorliegenden Erfindung die Bruchdehnung gemäß ISO 527-1 bestimmt. Grundsätzlich sind im Rahmen der vorliegenden Erfindung alle Metall-organischen Gerüstmaterialien geeignet, die eine geeignete Porengröße und eine ausreichende Verträglichkeit mit dem eingesetzten Polymer aufweisen. Es können auch zwei oder mehr Metall-organische Gerüstmaterialien enthalten sein. Metall-organische Gerüstmaterialien, auch als MOFs bezeichnet, sind mikroporöse kristalline Materialien, die aus metallischen Knotenpunkten und organischen Molekülen als Verbindungselementen zwischen den Knotenpunkten aufgebaut sind. Es können dreidimensionale Netzwerke ausgebildet werden, die in Abhängigkeit von den Linkern, Poren verschiedener Größe enthalten. MOFs zeichnen durch große innere Oberflächen, hohe Kristallinität und definierten Porengrößen aus. Die Porengröße kann über die Größe der organischen Liganden exakt festgelegt werden. Aufgrund ihrer organischen Bestandteile lassen sie sich gut in Polymere einarbeiten.

Für Materialien, die der Klasse der porösen Metall-organischen Gerüstverbindungen angehören, gibt es neben der Abkürzung MOF noch eine große Vielfalt an Kurzbezeichnungen wie IRMOF (= IsoReticular Metal-Organic Framework), HKUST (= Hong Kong University of Science & Technology), MIL (= Materiaux de l'Institut Lavoisier), ZIF (= Zeolitic Imidazolate Frameworks), COF (= Covalent Organic Frameworks), BAF (= BergAkademie Freiberg Framework), MFU (= Metal―Organic Framework Ulm University), oder TOF (= Thorium Organic Framework).

Geeignete Metall-organische Gerüstmaterialien enthalten mindestens eine an mindestens ein Metallion koordinativ gebundene, mindestens zweizähnige organische Verbindung. Geeignete Metall-organische Gerüstmaterialien gemäß der vorliegenden Erfindung enthalten Poren, insbesondere Mikro- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie in Pure Applied Chem. 45, Seite 71/Seite 79 (1976) angegeben ist. Die Anwesenheit von Mikro- und/oder Mesoporen kann mit Hilfe von Sorptionsmessungen überprüft werden, wobei diese Messungen die Aufnahmekapazität des MOF für Stickstoff bei 77 Kelvin gemäß DIN 66131 und/oder DIN 66134 bestimmen.

Vorzugsweise beträgt die spezifische Oberfläche ― berechnet nach dem Langmuir-Modell (DIN 66131, 66134) für ein MOF in Pulverform mehr als 5 m²/g, mehr bevorzugt über 10 m²/g, mehr bevorzugt mehr als 50 m²/g, weiter mehr bevorzugt mehr als 500 m²/g, weiter mehr bevorzugt mehr als 1000 m²/g und besonders bevorzugt mehr als 1500 m²/g.

MOF-Formkörper können eine niedrigere aktive Oberfläche besitzen; vorzugsweise jedoch mehr als 10 m²/g, mehr bevorzugt mehr als 50 m²/g, weiter mehr bevorzugt mehr als 500 m²/g und besonders bevorzugt mehr als 1000 m²/g.

Die Metallkomponente ist vorzugsweise ausgewählt aus den Gruppen Ia, IIa, IIIa, IVa bis VIIIa und Ib bis VIb des Periodensystems der Elemente. Besonders bevorzugt sind Mg, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Tl, Si, Ge, Sn, Pb, As, Sb und Bi. Mehr bevorzugt sind Zn, Cu, Ni, Pd, Pt, Ru, Rh und Co. Ganz besonders bevorzugt ist in dem porösen metallorganischen Gerüstmaterial des MOF ein Metallion aus der Gruppe bestehend aus Zn²⁺, Al³⁺ und Mg²⁺ vorhanden. Gemäß einer bevorzugten Ausführungsform des Funktionsartikels enthält das poröse Metall-organische Gerüstmaterial daher als Metall Zink, Magnesium oder Aluminium.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei, bevorzugt zwei, koordinative Bindungen und/oder zu zwei oder mehr, bevorzugt zu zwei, Metallatomen jeweils eine koordinative Bindung auszubilden. Als funktionelle Gruppen, über die die genannten koordinativen Bindungen ausgebildet werden können, sind insbesondere die folgenden funktionellen Gruppen zu nennen: -CO₂H, -CS₂H, - NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, - AsO₃H, -AsO₄H, -P(SH)₃, -As(SH)₃, -CH(RSH)₂, -C(RSH)₃, -CH(RNH₂)₂-C(RNH₂)₃, -CH(ROH)₂, - C(ROH)₃, -CH(RCN)₂, -C(RCN)₃, wobei R einen Hydrocarbylen-Rest darstellt, beispielsweise eine Alkylengruppe mit 1, 2, 3, 4 oder 5 Kohlenstoffatomen wie eine Methylen-, Ethylen-, n-Propylen-, iso-Propylen, n-Butylen-, iso-Butylen-, tert.-Butylen- oder n-Pentylengruppe, oder eine Arylengruppe, enthaltend 1 oder 2 aromatische Kerne wie beispielsweise 2 C6-Ringe, die gegebenenfalls kondensiert sein können und unabhängig voneinander mit mindestens jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugter Ausführungsformen sind funktionelle Gruppen zu nennen, bei denen der oben genannte Rest R nicht vorhanden ist. Diesbezüglich sind unter anderem -CH(SH)₂, - C(SH)₃, -CH(NH₂)₂, -C(NH₂)₃, -CH(OH)₂, -C(OH)₃, -CH(CN)₂ oder -C(CN)₃ zu nennen. Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist. Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab. Neben diesen mindestens zweizähnigen organischen Verbindungen kann das Metall-organische Gerüstmaterial auch eine oder mehrere einzähnige Liganden umfassen. Weitere Metallionen, mindestens zweizähnige organische Verbindungen und Lösemittel für die Herstellung von Metall-organischen Gerüstmaterialien sind beispielsweise in der WO 2015/144695 A1 beschrieben.

Die Porengröße des Metall-organischen Gerüstmaterials kann durch Wahl des geeigneten Liganden und/oder der mindestens zweizähnigen organischen Verbindung gesteuert werden. Allgemein gilt, dass je größer die organische Verbindung desto größer die Porengröße ist. Beispielsweise liegt der mittleren Porendurchmesser eines im Rahmen der vorliegenden Erfindung bevorzugten Metall-organischen Gerüstmaterials im Bereich von 0,2 bis 20 nm. Die Struktur der metall-organischen Verbindungen, bzw. ihre Porengröße/ihr Porendurchmesser kann durch verschiedene physikalische Verfahren bestimmt werden, beispielsweise mittels Gassorptionsmessungen, Röntgendiffraktometrie oder Rasterelektronenmikroskopie.

Gemäß einer bevorzugten Ausführungsform des Funktionsartikels liegt der Anteil des porösen Metall-organischen Gerüstmaterials im Bereich von 0,1 bis 20 Gew.-%, bezogen auf das Gesamtgewicht von thermoplastischem Polymer und porösem Metall-organischen Gerüstmaterial.

Das Metall-organische Gerüstmaterial kann sowohl in pulverförmiger als auch in gröberer kristalliner Form eingesetzt werden. Dabei sollte die mittlere Partikelgröße 10 µm nicht übersteigen. In Folien, Membranen oder laminierten Schichten sollte die mittlere Partikelgröße die Stärke der Folie, der Membran oder der Beschichtung nicht übersteigen.

Die Poren der Polymer-Membran werden bei Einsatz von Metall-organischen Gerüstmaterial zum einen durch die Poren des Metall-organischen Gerüstmaterials selbst gebildet (mittlerer Porendurchmesser im Bereich von 0,2 bis 20 nm). Zum anderen sind Poren vorhanden, welche sich nach Einbringung des Metall-organischen Gerüstmaterials in das thermoplastischem Polymer durch das Aushärten ergeben, da sich hierbei ein die Partikel des Metall-organischen Gerüstmaterials umgebender Hohlraum (Ritz) ergibt, wobei der Abstand vom Partikel zum Polymer <2 µm beträgt, und bevorzugt im Bereich von 0,5 bis <2 µm liegt.

Gemäß einer weiteren bevorzugten Ausführungsform des Funktionsartikels umfasst das thermoplastische Polymer der Polymer-Membran weiterhin mindestens treibmittelhaltige Polymer-Mikrosphären. Polymer-Mikrosphären haben eine annähernd kugelförmige Gestalt und umfassen eine Kunststoffhülle umfassend ein Polymer, sowie darin eingeschlossen ein Treibmittel, welches sich bei Erwärmung ausdehnt und so zu einer Expansion der Mikrosphäre führt. Die treibmittelhaltigen Polymer-Mikrosphären weisen bevorzugt unexpandiert einen Durchmesser im Bereich von 1 bis 100 µm, bevorzugt im Bereich von 5 bis 50 µm, auf. Das Polymer der treibmittelhaltigen Polymer-Mikrosphären ist bevorzugt ausgewählt aus der Gruppe von Polystryrol, Styrolacrylnitril und Mischungen dieser Polymere, das Treibmittel ist bevorzugt ausgewählt aus der Gruppe von niedrig siedenden Kohlenwasserstoffen, weiter bevorzugt aus der Gruppe bestehend aus Pentan, Isopentan, Cyclopentan, Hexan, Cyclohexan und Mischungen dieser Kohlenwasserstoffe. Der Anteil der Polymer-Mikrosphären im thermoplastischen Polymer beträgt bevorzugt 1 bis 20 Gew.-%, bezogen auf das Gesamtgewicht von Polymer-Mikrosphären und thermoplastischem Polymer. Die Poren der Polymer-Membran werden bei Einsatz von Polymer-Mikrosphären durch das Abkühlen bzw. das Aushärten des thermoplastischen Polymers erhalten, da sich hierbei ein die Polymer-Mikrosphären umgebender Hohlraum (Ritz) ergibt, wobei der Abstand vom Polymer-Mikrosphäre zum Polymer <2 µm beträgt, und bevorzugt im Bereich von 0,5 bis <2 µm liegt.

Der erfindungsgemäße Funktionsartikel ist wählt aus der Gruppe bestehend aus Funktionsbekleidungsstück, insbesondere Jacke, Hose, Pulli, Weste, Kapuzenshirt, Overall, Cape, Poncho, Mantel, Mütze oder Hut, bevorzugt für Sportbekleidung wie Golf- Ski, Wander-, Lauf-, Joggingbekleidung, Funktionsschuh, Funktionsgegenstand, insbesondere Tasche, Rucksack oder Zelt; Badebekleidungsstück, insbesondere Badeanzug, Tankini, Bikini, Badehose, Badeschuh oder Badekappe; Bekleidung für Wassersport, insbesondere Segelbekleidung, Surfbekleidung oder Kitesurfbekleidung, bevorzugt Surfbekleidung oder Kitesurfbekleidung, bevorzugt Funktionsbekleidungsstück.

Gemäß einem weiteren Aspekt betrifft die vorliegende Erfindung auch ein Verfahren zur Herstellung eines Funktionsartikels umfassend eine wasserdichte atmungsaktive Polymer-Membran, wobei der Funktionsartikel keine weitere Schicht, beispielsweise keine Gewebeschicht, aufweist, umfassend:
i) Erzeugen von Segmenten der Polymer-Membran, welche eine geeignete Form aufweisen;
ii) Verbinden der Segmente gemäß (i) mittels Verkleben oder Verschweißen.

Gemäß einer bevorzugten Ausführungsform des Verfahrens zur Herstellung eines Funktionsartikels umfasst Schritt i):
i.1) Erzeugen von Segmenten geeigneter Größe der Polymer-Membran;
i.2) Formgebung der Segmente gemäß (i.1) durch Einlegen in eine beheizte Form und tiefziehen.

Das Verbinden der Segmente mittels Verkleben gemäß (ii) erfolgt bevorzugt mit Lösungsmittel oder mit Hot Melts.

Gemäß einem weiteren Aspekt betrifft die vorliegende Erfindung auch ein Verfahren zur Herstellung eines Funktionsartikels umfassend eine wasserdichte atmungsaktive Polymer-Membran, wobei der Funktionsartikel keine weitere Schicht, beispielsweise keine Gewebeschicht, aufweist, umfassend:
a) Erzeugen einer Schlauchmembran aus der Polymer-Membran;
b) Aufbringung der Schlauchmembran gemäß (a) auf eine, optional expandierbare oder aufblasbare, Form, deren Gestalt bevorzugt der Gestalt des Funktionsartikels entspricht;
c) in-Form-bringen der Schlauchmembran durch Zufuhr von Wasserdampf.

Gemäß einer bevorzugten Ausführungsform umfasst dieses Verfahren weiterhin:
d) Aushärten des Funktionsartikels in seiner endgültigen Form durch Abkühlung, bevorzugt durch Abkühlung auf eine Temperatur von weniger als 30°C.

Für beide im voranstehenden beschriebene Verfahren zur Herstellung eines Funktionsartikels wird eine Polymer-Membran eingesetzt. Diese Polymer-Membran ist bevorzugt erhalten oder erhältlich mittels
(0-1) Bereitstellen einer Lösung (L1) umfassend zumindest ein thermoplastisches Polymer (P1);
(0-2) Erzeugen einer Membran aus der Lösung (L1) mittels Phaseninversion.

Die gemäß (0-2) eingesetzte Lösung (L1) umfasst bevorzugt mindestens ein Additiv, ausgewählt aus der Gruppe bestehend aus mono-, di- und Trialkanolen, welche keine weiteren funktionalen Gruppen aufweisen, bevorzugt aus der Gruppe bestehend iso-Propanol, Ethylenglykol, Propylenglykol und Propylentriol (Glycerin), bevorzugt Glycerin.

Gemäß (ii) wird aus der Lösung (L1) eine Membran mittels Phaseninversion erzeugt. Geeignete Verfahren sind dem Fachmann an sich bekannt. Erfindungsgemäß wird eine nicht-lösungsmittel induzierte Phaseninversion durchgeführt.

Gemäß einer bevorzugten Ausführungsform umfasst der Schritt (0-2) die Schritte (0-2-a) und (0-2-b):
(0-2-a) Ausbilden eines Films aus der Lösung (L1);
(0-2-b) Kontaktieren des Films gemäß (0-2-a) mit einer Mischung (L2).

Gemäß Schritt p (0-2-a) wird aus der Lösung (L1) ein Film ausgebildet, wobei dem Fachmann bekannte Verfahren angewandt werden. Der Film wird anschließend gemäß (0-2-b) mit einer Mischung (L2) in Kontakt gebracht. Der Schritt (0-2) verursacht Koagulation, wobei Membranen erhalten werden. Die Mischung (L2) kann jedwede Verbindung enthalten, welche geeignet ist, Koagulation zu verursachen (Koagulanz). Die Mischung (L2) weist insbesondere eine geringere Löslichkeit für das thermoplastische Elastomer (P1), insbesondere für das Polyurethan, auf. Als das Lösungsmittel, dass für die Herstellung von (L1) eingesetzt wurde. Bevorzugt werden nicht-Lösemittel wie beispielsweise Wasser oder Wasser enthaltende Mischungen für (L2) eingesetzt. Geeignete Koagulantien umfassen daher flüssiges Wasser, Wasserdampf, Alkohole oder Mischungen von zwei oder mehr davon. Gemäß einer Ausführungsform umfasst (L2) ein Koagulanz ausgewählt aus der Gruppe von flüssigem Wasser, Wasserdampf, Alkoholen oder Mischungen hiervon. Alkohole, welche als Koagulantien bevorzugt sind, sind Mono-, Di-, oder Trialkanole, welche keine weiteren funktionellen Gruppen aufweisen, beispielsweise iso-Propanol, Ethylenglykol oder Propylenglykol. Gemäß einer bevorzugten Ausführungsform umfasst die gemäß (0-2-b) eingesetzte Mischung (L2) flüssiges Wasser. Die gemäß diesem Verfahren erzeugte Polymer-Membran weist Poren mit einem mittleren Porendurchmesser <2000 nm, bevorzugt im Bereich von 0,001 µm bis 0,8 µm, bestimmt mittels Hg-Porosimetrie gemäß DIN 66133, auf.

Gemäß einem weiteren Aspekt betrifft die Erfindung ein Verfahren zur Herstellung eines Funktionsartikels, wobei die Polymer-Membran erhalten oder erhältlich ist mittels
(0-1) Bereitstellen einer Zusammensetzung (Z1), wobei die Zusammensetzung mindestens die folgenden Komponenten enthält:
   - mindestens ein thermoplastisches Polymer, bevorzugt mit einer Bruchdehnung >100%;
   - mindestens ein poröses Metall-organisches Gerüstmaterial;
(0-2) Herstellen eines Formkörpers aus der Zusammensetzung (Z1) mittels Extrusion, Spritzguss, Gieß-, Blas- oder Sinterverfahren.

Der Anteil des porösen Metall-organischen Gerüstmaterials in der Zusammensetzung (Z1) liegt bevorzugt im Bereich von 0,1 bis 20 Gew.-%. Das poröse Metall-organische Gerüstmaterial enthält als Metall bevorzugt Zink, Magnesium oder Aluminium und weist bevorzugt einen mittleren Porendurchmesser im Bereich von 0,2 bis 20 nm auf. Die gemäß diesem Verfahren erzeugte Polymer-Membran weist Poren mit einem mittleren Porendurchmesser <2000 nm, bestimmt mittels Hg-Porosimetrie gemäß DIN 66133, auf.

Gemäß einem weiteren Aspekt betrifft die Erfindung ein Verfahren zur Herstellung eines Funktionsartikels, wobei die Polymer-Membran erhalten oder erhältlich ist mittels
(0-1) Bereitstellen einer Zusammensetzung (Z1), wobei die Zusammensetzung mindestens die folgenden Komponenten enthält:
   - mindestens ein thermoplastisches Polymer;
   - mindestens treibmittelhaltige Polymer-Mikrosphären;
(0-2) Herstellen eines Formkörpers aus der Zusammensetzung (Z1) mittels Extrusion, Spritzguss, Gieß-, Blas- oder Sinterverfahren.

Bevorzugt umfasst dieses Verfahren weiterhin:
(0-3) Erwärmen auf eine Temperatur oberhalb der Siedetemperatur des Treibmittels.

Die treibmittelhaltigen Polymer-Mikrosphären weisen bevorzugt unexpandiert einen Durchmesser im Bereich von 1 bis 100 µm auf und umfassen ein Polymer, welches bevorzugt ausgewählt ist aus der Gruppe von Polystryrol, Styrolacrylnitril und Mischungen dieser Polymere, sowie ein Treibmittel, welches bevorzugt ausgewählt ist aus der Gruppe von niedrig siedenden Kohlenwasserstoffen, weiter bevorzugt aus der Gruppe bestehend aus Pentan, Isopentan, Cyclopentan, Hexan, Cyclohexan und Mischungen dieser Kohlenwasserstoffe. Der Anteil der treibmittelhaltigen Polymer-Mikrosphären in der Zusammensetzung (Z1) liegt bevorzugt im Bereich von 0,1 bis 20 Gew.-%. Die gemäß diesem Verfahren erzeugte Polymer-Membran weist Poren mit einem mittleren Porendurchmesser <2000 nm, bestimmt mittels Hg-Porosimetrie gemäß DIN 66133, auf.

Gemäß einem weiteren Aspekt betrifft die Erfindung auch ein Verfahren zur Herstellung eines Funktionsartikels umfassend eine wasserdichte atmungsaktive Polymer-Membran, wobei der Funktionsartikel keine weitere Schicht, beispielsweise keine Gewebeschicht, aufweist, umfassend:
a) Erzeugen einer Polymer-Lösung (L3), wobei die Lösung mindestens ein thermoplastisches Polymer enthält;
b) Eintauchen eines Formkörpers in die Lösung L3 gemäß (a), wobei die Gestalt des Formkörpers bevorzugt der Gestalt des Funktionsartikels entspricht, unter Erhalt eines mit Polymer-Lösung überzogenen Formkörpers;
c) Erwärmen des mit Polymer-Lösung überzogenen Formkörpers gemäß (b) unter Erhalt einer Polymer-Membran auf der Oberfläche des Formkörpers durch Koagulation des thermoplastischen Polymers;
d) Erzeugen einer Membran mittels Phaseninversion.

Gemäß einer bevorzugten Ausführungsform umfasst dieses Verfahren weiterhin:
e) Ablösen der Polymer-Membran gemäß (c) vom Formkörper mittels Druckluft unter Erhalt einer Polymer-Membran aufweisend die Gestalt des Formkörpers.

Die gemäß diesem Verfahren erzeugte Polymer-Membran weist Poren mit einem mittleren Porendurchmesser <2000 nm, bestimmt mittels Hg-Porosimetrie gemäß DIN 66133, auf.

In einem weiteren Aspekt betrifft die vorliegende Erfindung auch einen Funktionsartikel, erhalten oder erhältlich nach einem der oben beschriebenen Verfahren.

Ein weiterer Aspekt der vorliegenden Erfindung betrifft die Verwendung einer wasserdichten atmungsaktiven Polymer-Membran zur Herstellung eines Funktionsartikels, wobei der Funktionsartikel keine Gewebeschicht aufweist. In einer weiter bevorzugten Ausführungsform besteht der Funktionsartikel zu 80 Gewichts-%, bevorzugt zu 85 Gewichts-%, weiter bevorzugt zu 90 Gewichts-%, weiter bevorzugt zu 95 Gewichts-%, weiter bevorzugt zu 99,5 Gewichts-% aus der wasserdichten atmungsaktiven Polymer-Membran, d.h. es sind keine weiteren Schichten gleich welcher Art vorhanden. Die zu 100 Gewichts-% jeweils verbleibenden Gewichts-% enthalten keine weitere(n) Schicht(en), sondern ergänzende Bestandteile wie beispielsweise Aufnäher, Aufkleber oder Reißverschlüsse. Der Funktionsartikel besteht hierbei weiter bevorzugt (ausschließlich) aus der wasserdichten atmungsaktiven Polymer-Membran. Insbesondere weist der Funktionsartikel keine Stichnaht auf.

Für die Verwendung weist die Polymer-Membran ebenfalls eine

Reißdehnung größer 100%, bevorzugt größer 150%, weiter bevorzugt größer 200%, gemessen nach DIN 53504, auf. Die Polymer-Membran weist bevorzugt eine absolute Wasserdampfdurchlässigkeit (WDD_{abs.}) bei 38 °C und 90 % relativer Luftfeuchtigkeit entsprechend DIN 53122 größer als 1000 [g/m^{2*}d] auf. Die eine Wasserdichtigkeit (LEP) ist bevorzugt größer als 1 bar, bevorzugt im Bereich von 2 bis 5 bar, weiter bevorzugt im Bereich von 3 bis 4 bar, bestimmt nach DIN EN 20811. Bevorzugt wird eine Polymer-Membran verwendet, welche eine mittlere Dicke im Bereich von 5 bis 500 µm, bevorzugt im Bereich von 10 bis 200 µm, weiter bevorzugt von 20 bis 200 µm, aufweist. Gemäß einer weiteren bevorzugten Ausführungsform wird eine Polymer-Membran verwendet, welche einen Spannungswert bei 100% Dehnung unterhalb von 250kPa, bei 200% Dehnung unterhalb von 500kPa, aufweist. Die Polymer-Membran umfasst mindestens ein thermoplastisches Polymer, welches ausgewählt aus der Gruppe bestehend aus Polyurethan, Polyester, Polyetherester, Polyesterester, Polyamid, Polyetheramid, Polybutadienstyrol und Ethylenvinylacetat, bevorzugt ausgewählt aus der Gruppe bestehend aus thermoplastischem Polyurethan (TPU); Polyamid, insbesondere Polyamid 11 (PA11), Polyamid 12 (PA12), Polyamid 6-636 (PA6-636) und Polyamid-Copolymer; und Polyester, insbesondere biologisch abbaubarem Polyester (Ecoflex), bevorzugt TPU.

Bevorzugt wird zur Herstellung des Funktionsartikels eine Polymer-Membran verwendet, welche mindestens ein TPU umfasst, wobei das TPU auf den folgenden Komponenten basiert:
- 11 bis 79 Gewichts-% einer Mischung aus mindestens einem Diol (D1) und mindestens einem Isocyanat (I1),
- 21 bis 89 % Gewichts-% mindestens einer Verbindung (C1) aufweisend mindestens zwei gegenüber Isocyanat reaktiven Gruppen.

Bevorzugt basiert das TPU auf den folgenden Komponenten:
- 15 bis 75 Gewichts-% einer Mischung aus mindestens einem Diol (D1) und mindestens einem Isocyanat (I1),
- 25 bis 85 Gewichts-% mindestens einer Verbindung (C1) aufweisend mindestens zwei gegenüber Isocyanat reaktiven Gruppen;
weiter bevorzugt basiert das TPU auf den folgenden Komponenten:
- 20 bis 75 Gewichts-% einer Mischung aus mindestens einem Diol (D1) und mindestens einem Isocyanat (I1),
- 25 bis 80 Gewichts-% mindestens einer Verbindung (C1) aufweisend mindestens zwei gegenüber Isocyanat reaktiven Gruppen.

Das mindestens eine Diol (D1) ist bevorzugt ausgewählt aus der Gruppe bestehend aus Ethandiol, Butandiol, Hexandiol und Monoethylenglykol, und umfasst weiter bevorzugt mindestens 1,4-Butandiol oder Monoethylenglykol.

Das mindestens eine Isocyanat (I1) ist bevorzugt ein Polyisocyanat, weiter bevorzugt ausgewählt aus der Gruppe bestehend aus Diphenylmethandiisocyanat (MDI), Toluoldiisocyanat (TDI), und Hexamethylendiisocyanat (HDI), Dicyclohexylmethan-4,4'-diisocyanat (H12MDI), weiter bevorzugt mindestens MDI.

Die mindestens eine Verbindung (C1) aufweisend mindestens zwei gegenüber Isocyanat reaktiven Gruppen ist bevorzugt ein Polyol, weiter bevorzugt ausgewählt aus der Gruppe bestehend aus Polyesterpolyol und Polyetherpolyol.

Gemäß einer bevorzugten Ausführungsform wird zur Herstellung des Funktionsartikels eine Polymer-Membran verwendet, welche nur ein thermoplastischen Polymer, bevorzugt nur ein TPU, aufweist. Die Polymer-Membran weist bevorzugt Poren mit einem mittleren Porendurchmesser kleiner als 2000 nm, bestimmt mittels Hg-Porosimetrie gemäß DIN 66133, auf.

Die Polymer-Membran, welche für die Herstellung des Funktionsartikels verwendet wird, weist Poren mit einem mittleren Porendurchmesser im Bereich von 0,001 µm bis 0,8 µm, bestimmt mittels Hg-Porosimetrie gemäß DIN 66133, auf.

Die Polymer-Membranen werden aus einer Lösung (L1) umfassend zumindest ein thermoplastisches Polymer (P1) mittels Phaseninversion, insbesondere mittels Ausbilden eines Films aus der Lösung (L1) und Kontaktieren des Films mit einer Mischung (L2) wie nachstehend zum Verfahren noch beschrieben erzeugt.

Gemäß einer weiteren bevorzugten Ausführungsform wird für die Herstellung des Funktionsartikels eine Polymer-Membran verwendet, wobei das thermoplastische Polymer der Polymer-Membran weiterhin mindestens ein poröses Metall-organisches Gerüstmaterial umfasst und bevorzugt eine Bruchdehnung >100% aufweist. Das poröse Metall-organische Gerüstmaterial weist bevorzugt einen mittleren Porendurchmesser im Bereich von 0,2 bis 20 nm auf, wobei die Polymer-Membranwie oben beschrieben bevorzugt Poren mit einem mittleren Porendurchmesser kleiner als 2000 nm, bestimmt mittels Hg-Porosimetrie gemäß DIN 66133, aufweist. Bevorzugt enthält das poröse Metall-organische Gerüstmaterial als Metall Zink, Magnesium oder Aluminium. Der Anteil des porösen Metall-organischen Gerüstmaterials liegt bevorzugt im Bereich von 0,1 bis 20 Gew.-%, bezogen auf das Gesamtgewicht von thermoplastischem Polymer und porösem Metall-organischen Gerüstmaterial.

Gemäß einer weiteren bevorzugten Ausführungsform wird für die Herstellung des Funktionsartikels eine Polymer-Membran verwendet, wobei, wobei das thermoplastische Polymer der Polymer-Membran weiterhin mindestens treibmittelhaltige Polymer-Mikrosphären umfasst. Die treibmittelhaltigen Polymer-Mikrosphären weisen unexpandiert bevorzugt einen Durchmesser im Bereich von 1. bis 100 µm, bevorzugt im Bereich von 5 bis 50 µm, auf. Die treibmittelhaltigen Polymer-Mikrosphären umfassen bevorzugt ein Polymer, welches ausgewählt ist aus der Gruppe von Polystryrol, Styrolacrylnitril und Mischungen dieser Polymere, sowie ein Treibmittel, welches ausgewählt ist aus der Gruppe von niedrig siedenden Kohlenwasserstoffen, weiter bevorzugt aus der Gruppe bestehend aus Pentan, Isopentan, Cyclopentan, Hexan, Cyclohexan und Mischungen dieser Kohlenwasserstoffe. Die Polymer-Membran weist wie oben beschrieben bevorzugt Poren mit einem mittleren Porendurchmesser kleiner als 2000 nm, bestimmt mittels Hg-Porosimetrie gemäß DIN 66133, auf. Der Anteil der Polymer-Mikrosphären liegt bevorzugt im Bereich von 0,1 bis 20 Gew.-%, bezogen auf das Gesamtgewicht von thermoplastischem Polymer und Polymer-Mikrosphären.

Der Funktionsartikel, für dessen Herstellung die wasserdichten atmungsaktiven Polymer-Membran verwendet wird und welcher keine weitere Schicht, beispielsweise keine Gewebeschicht, aufweist, ist bevorzugt ausgewählt aus der Gruppe bestehend aus Funktionsbekleidungsstück, insbesondere Jacke, Hose, Pulli, Weste, Kapuzenshirt, Overall, Cape, Poncho, Mantel, Mütze oder Hut, bevorzugt für Sportbekleidung wie Golf- Ski, Wander-, Lauf-, Joggingbekleidung, Funktionsschuh, Funktionsgegenstand, insbesondere Tasche, Rucksack oder Zelt; Badebekleidungsstück, insbesondere Badeanzug, Tankini, Bikini, Badehose, Badeschuh oder Badekappe; Bekleidung für Wassersport, insbesondere Segelbekleidung, Surfbekleidung oder Kitesurfbekleidung, bevorzugt Surfbekleidung oder Kitesurfbekleidung, weiter bevorzugt Funktionsbekleidungsstück.

### Angeführte Literatur

WO 2015/144695 A1

"Kunststoffhandbuch, 7, "Polyurethane", Carl Hanser Verlag, 3. Auflage 1993, Sektion 3.1 "Kunststoffhandbuch, 7, "Polyurethane", Carl Hanser Verlag, 1. Auflage 1966, Seiten 103-113

### Beispiele

**1. Chemikalien**

| Abkürzung | Bezeichnung | Chemische Zusammensetzung |
|---|---|---|
| Iso1 | Isocyanat 1 | 4,4'-Diisocyanatodiphenylmethan |
| Poly1 | Polyol 1 | Polytetrahydrofuran, Mn¹): ∼2000 g/mol, mit einer OH Zahl von 56 |
| Poly2 | Polyol 2 | Polytetrahydrofuran, Mn¹): ∼1000 g/mol, mit einer OH Zahl von 112 |
| Poly3 | Polyol 3 | Polyesterpolyol auf Basis Adipinsäure, Butandiol und Ethandiol (1 : 1), Mn¹): ∼2000 g/mol und einer OH Zahl von 56 |
| KV1 | Kettenverlängerer 1 | 1,4-Butandiol |
| KV2 | Kettenverlängerer 2 | Monoethylenglykol |
| Weich1 | Weichmacher 1 | Acetyltributylcitrat |
| Stab1 | Stabilisator 1 (Antioxidationsmittel) | sterisch gehindertes Phenol |
| Stab2 | Stabilisator 2 (Hydrolysestabilisator) | Polymer-Carbodiimid |
| UV1 | UV Stabilisator | Benztriazolderivate |
| Wachs1 | Gleitmittel 1 | Bisstearylamid |
| Wachs2 | Gleitmittel 2 | Esterwachs |

| | | |
|---|---|---|
| ¹) Mn ist das zahlenmittlere Molekulargewicht | | |

### 2. Meßmethoden

Härte: DIN 53505
Zugfestigkeit, Reißdehnung und Spannung: DIN 53504
Spannungswert: DIN 53504-S2
Weiterreißwiderstand: DIN ISO 34-1, B (b)
Dichte: DIN 53479
Wasserdampfdurchlässigkeit (WDD): DIN 53122 bei 38°C und 90% Luftfeuchtigkeit
Wasserdichtigkeit (LEP): DIN 20811

### 3. Allgemeine Verfahrensvorschrift zur Herstellung der TPU

Die Polyole werden unter Rühren mit dem Kettenverlängerer versetzt. Nach anschließender Erwärmung der Lösung auf 80 °C wurden das Isocyanat sowie ggf. die in den Rezepturen aufgeführten Additive zugegeben und so lange gerührt, bis die Lösung homogen war. Die Reaktionsmischung erhitzte sich und wurde dann auf einen beheizten, teflonbeschichteten Tisch ausgegossen. Die Gießschwarte wurde 12h bei 110°C getempert und anschließend granuliert.

### Extrusion

Zur Homogenisierung der hergestellten Proben wurden diese auf einem Zweiwellenextruder zu Zylindergranulat verarbeitet.

Die Extrusion erfolgte auf einem Doppelschneckenextruder mit 19mm Schneckendurchmesser, der einen Strangdurchmesser von ca. 2 mm lieferte.

| Extruder: | gleichläufiger Doppelschneckenextruder, APV MP19 |
|---|---|
| Temperaturprofil: | HZ1 170 °C bis 220 °C |
| | HZ2 180 °C bis 230 °C |
| | HZ3 190 °C bis 230 °C |
| | HZ4 210 °C bis 240 °C |
| | HZ5 (Düse) 200 °C bis 240 °C |
| Schneckendrehzahl : | 100 U/min |
| Druck: | ca. 10 bis 30 bar |
| Strangkühlung: | Wasserbad (10 °C) |

Das Temperaturprofil wurde abhängig von der Erweichungstemperatur des Polymeren gewählt.

### 4. Herstellung thermoplastischer Polyurethane

Aus den Ausgangsmaterialien werden die in Tab. 1 ersichtlichen thermoplastischen Polyurethane TPU 1 bis 4 gemäß der allgemeinen Vorschrift aus 3. hergestellt.

**Tabelle 1: Zusammensetzung der TPUs 1 bis 4**

| | TPU 1 (Gew.-Teile) | TPU 2 (Gew.-Teile) | TPU 3 (Gew.-Teile) | TPU4 (Gew.-Teile) |
|---|---|---|---|---|
| Poly1 | 34,24 | | | |
| Poly2 | 34,24 | | 61,22 | 37,14 |
| Poly3 | | 64,89 | | |
| Poly4 | | | | |
| Iso1 | 25,47 | 16,87 | 31,84 | 51,43 |
| KV1 | 4,52 | 4,57 | 5,94 | 14,03 |
| KV2 | | 2,09 | | |
| Weich1 | | 15,00 | | |
| Stab1 | 1,00 | | 1,00 | 0,50 |
| Stab2 | | 0,65 | | |
| UV1 | 0,50 | | | |
| Wachs1 | | | 0,05 | |
| Wachs2 | | 0,30 | | |

### 5. Bestimmung der mechanischen Eigenschaften der TPUs

Die mechanischen Eigenschaften der erzeugten TPUs, gemessen an Spritzgussplatten aus den gemäß Sektion 4 hergestellten TPU ergeben sich aus Tabelle 3.

**Tabelle 3**

| TPU | | TPU1 | TPU2 | TPU3 | TPU4 |
|---|---|---|---|---|---|
| Dichte | [g/cm³] | 1,08 | 1,18 | 1,12 | 1,23 |
| Härte | [Shore A] | 72 | 36 | 87 | 99 |
| Abrieb | [mm³] | 33 | 250 | 34 | 80 |
| Zugfestigkeit | [MPa] | 36 | 9 | 46 | 68 |
| Reißdehnung | [%] | 700 | 1100 | 600 | 220 |
| Weiterreißwiderstand | [N/mm] | 45 | 20 | 75 | 246 |

### 6. Herstellung von Polymer-Membranen

### 6.1 Herstellung von Polymer-Membranen aus TPU1, TPU2, TPU3

Aus den TPU's 1-3 wurde jeweils eine 10%tige Lösung in THF durch Rühren hergestellt.

Die Lösung enthaltend TPU1 wurde mit 10 Gew% MOF Basolite A520, einem metallorganischen Framework auf der Basis von Al-fumarat mit einer Porengröße von 8 A vermischt.

Die Lösung enthaltend TPU3 wurde mit 5 Gew% MOF Basolite Z1200, einem metallorganischen Framework auf der Basis von Zn-2-methylimidazolate mit einer Porengröße von 4 A vermischt.

Die Lösung enthaltend TPU2 wurde mit 4 Gew% Pentan beladenen Mikrosphären aus Polystyrol/Styrolacrylnitril (PS/SAN-Mikrosphären, mittlere Partikelgröße 20 µm) vermischt.

Aus den dispergierten Lösungen wurden mittels eines Rakels Gießfolie hergestellt.

Die Lösungen enthaltend TPU1 bzw. TPU2 wurden bei Raumtemperatur getrocknet, die Lösung enthaltend TPU3 wurde bei Raumtemperatur getrocknet und zusätzlich 5 min auf 150°C in einem Umluftofen erwärmt um das Treibmittel aus den PS/SAN-Mikrosphären auszutreiben.

### 6.2 Herstellung einer porösen Polymer-Membran aus TPU4 mit N-Methylpyrrolidon als Polymer-Lösungsmittel

In einem Dreihalskolben mit einem Magnetrührer wurden 71 ml N-Methylpyrrolidon 1, 10 g Glycerin als zweites Additiv und 19 g TPU-Polymer zusammengegeben. Die Mischung wurde unter leichtem Rühren auf 60°C erwärmt, bis seine homogene klare viskose Lösung vorlag. Die Lösung wurde über Nacht bei Raumtemperatur entgast. Es wurden klare und transparente Polymerlösungen erhalten.

Anschließend wurde die Polymerlösung wieder für 2h auf 60°C erwärmt und dann auf einer Glasplatte mit einem Gußmesser (150 microns) bei 60°C verteilt, unter Verwendung einer Erichsen Beschichtungsmaschine bei einer Geschwindigkeit von 5 mm/s. Der Membranfilm wurde für 30 Sekunden ruhen gelassen, anschließend folgte Immersion in einem Wasserbad bei 25°C für 10 Minuten. Nach Ablösung der Membran von der Glasplatte wurde die Membran für 12 Stunden in ein Wasserbad überführt.

Die Eigenschaften der erfindungsgemäß hergestellten Polymer-Membranen in Anlehnung an die DIN Normen ergeben sich aus Tab. 4:

**Tabelle 4**

| Polymer-Membran aus | | TPU 1 | TPU 2 | TPU 3 | TPU4 |
|---|---|---|---|---|---|
| Wasserdichtigkeit (LEP) | [bar] | >1 | >1 | >2 | >3 |
| Wasserdampfdurchlässigkeit (WDD) | [g/m²*d] | 2200 | 1250 | 1200 | 1300 |
| Spannung bei 100 % | [KPa] | 130 | 70 | 160 | 210 |
| Spannung bei 200 % | [KPa] | 280 | 170 | 310 | 450 |
| Reißdehnung | [%] | >400 | >250 | >430 | >200 |

Wie aus den Messwerten ersichtlich, zeigen alle Polymer-Membranen eine ausreichende Reißdehnung (>150%, vorzugsweise >200%). Weiterhin liegt für alle Polymer-Membranen der Spannungswert bei 100% Dehnung unterhalb von 250kPa, bei 200% Dehnung unterhalb von 500kPa, bestimmt gemäß DIN 53504-S2. Die Wasserdampfdurchlässigkeit (WDD) bei 38°C und 90% Luftfeuchtigkeit beträgt bei allen Polymer-Membranen mindestens 1000g/m2*d. Die Wasserdichtigkeit (LEP) ist für alle Polymer-Membranen größer als 1 bar.

### 7. Verschweißen der Membranen zu Funktionsartikeln

Jeweils zwei Membranen gemäß Sektion 6 wurden bei 200°C und einem Druck von 3 bar für einen Zeitraum von drei Sekunden unter Luft verschweißt, wobei eine halbautomatische Impulsschweißmaschine (Folienschweißgerät) des Typs HPL 630 A der Firma Hawo Gerätebau GmbH, D-74847 Obrigheim eingesetzt wurde und ein verschweißter Membranverbund mit einer Schweißnaht erhalten wurde, welche eine Breite von 3,5 mm aufwies. Der verschweißte Membranverbund hatte im Bereich der Schweißnaht eine Dicke von 120 µm.

## Patentansprüche

1. Funktionsartikel umfassend eine wasserdichte atmungsaktive Polymer-Membran, wobei der Funktionsartikel aus der wasserdichten atmungsaktiven Polymer-Membran besteht und wobei der Funktionsartikel keine weitere Schicht aufweist; wobei der Funktionsartikel ausgewählt ist aus der Gruppe bestehend aus Funktionsbekleidungsstück; Funktionsschuh; Funktionsgegenstand, ausgewählt aus der Gruppe bestehend aus Tasche, Rucksack oder Zelt; Badebekleidungsstück; und Bekleidung für Wassersport, wobei die Polymer-Membran eine Reißdehnung größer 100% gemessen nach DIN 53504 aufweist; wobei die Polymer-Membran aus einer Lösung (L1) umfassend zumindest ein thermoplastisches Polymer und mindestens ein Additiv, ausgewählt aus der Gruppe bestehend aus mono-, di- und Trialkanolen, welche keine weiteren funktionalen Gruppen aufweisen, mittels Ausbilden eines Films aus der Lösung (L1) und Kontaktieren des Films mit einer Mischung (L2) umfassend ein Koagulanz ausgewählt aus der Gruppe von flüssigem Wasser, Wasserdampf, Alkoholen oder Mischungen hiervon, erzeugt ist und Poren mit einem mittleren Porendurchmesser im Bereich von 0,001 µm bis 0,8 µm, bestimmt mittels Hg-Porosimetrie gemäß DIN 66133, aufweist; und wobei die Polymer-Membran mindestens ein thermoplastisches Polymer ausgewählt aus der Gruppe bestehend aus Polyurethan, Polyester, Polyetherester, Polyesterester, Polyamid, Polyetheramid, Polybutadienstyrol und Ethylenvinylacetat umfasst.

2. Funktionsartikel gemäß Anspruch 1, wobei der Funktionsartikel keine Stichnaht aufweist.

3. Funktionsartikel gemäß Anspruch 1 oder 2, wobei die Polymer-Membran eine Reißdehnung größer 150%, bevorzugt größer 200%, gemessen nach DIN 53504, aufweist.

4. Funktionsartikel gemäß einem der Ansprüche 1 bis 3, wobei die Polymer-Membran eine absolute Wasserdampfdurchlässigkeit (WDD_{abs.}) bei 38 °C und 90 % relativer Luftfeuchtigkeit entsprechend DIN 53122 größer als 1000 [g/m^{2*}d] aufweist.

5. Funktionsartikel gemäß einem der Ansprüche 1 bis 4, wobei die Polymer-Membran eine Wasserdichtigkeit (LEP) größer als 1 bar, bevorzugt im Bereich von 2 bis 5 bar, weiter bevorzugt im Bereich von 3 bis 4 bar, aufweist, bestimmt nach DIN EN 20811.

6. Funktionsartikel gemäß einem der Ansprüche 1 bis 5, wobei die Polymer-Membran mindestens ein thermoplastisches Polymer umfasst, ausgewählt aus der Gruppe bestehend aus thermoplastischem Polyurethan (TPU); Polyamid, insbesondere Polyamid 11 (PA11), Polyamid 12 (PA12), Polyamid 6-636 (PA6-636) und Polyamid-Copolymer; und Polyester, insbesondere biologisch abbaubarem Polyester (Ecoflex); bevorzugt TPU.

7. Funktionsartikel gemäß einem der Ansprüche 1 bis 6, wobei die Polymer-Membran mindestens ein TPU umfasst, wobei das TPU auf den folgenden Komponenten basiert:
- 11 bis 79 Gewichts-% einer Mischung aus mindestens einem Diol (D1) und mindestens einem Isocyanat (I1),
- 21 bis 89 % Gewichts-% mindestens einer Verbindung (C1) aufweisend mindestens zwei gegenüber Isocyanat reaktiven Gruppen.

8. Verfahren zur Herstellung eines Funktionsartikels umfassend eine wasserdichte atmungsaktive Polymer-Membran gemäß einem der Ansprüche 1 bis 7, umfassend:
i) Erzeugen von Segmenten der Polymer-Membran, welche eine geeignete Form aufweisen;
ii) Verbinden der Segmente gemäß (i) mittels Verkleben oder Verschweißen;
wobei der Funktionsartikel ausgewählt ist aus der Gruppe bestehend aus Funktionsbekleidungsstück; Funktionsschuh; Funktionsgegenstand, ausgewählt aus der Gruppe bestehend aus Tasche, Rucksack oder Zelt; Badebekleidungsstück; und Bekleidung für Wassersport.

9. Verfahren zur Herstellung eines Funktionsartikels umfassend eine wasserdichte atmungsaktive Polymer-Membran gemäß einem der Ansprüche 1 bis 7, umfassend:
a) Erzeugen einer Schlauchmembran aus der Polymer-Membran;
b) Aufbringung der Schlauchmembran gemäß (a) auf eine, optional expandierbare oder aufblasbare, Form, deren Gestalt bevorzugt der Gestalt des Funktionsartikels entspricht;
c) in-Form-bringen der Schlauchmembran durch Zufuhr von Wasserdampf;
wobei der Funktionsartikel ausgewählt ist aus der Gruppe bestehend aus Funktionsbekleidungsstück; Funktionsschuh; Funktionsgegenstand, ausgewählt aus der Gruppe bestehend aus Tasche, Rucksack oder Zelt; Badebekleidungsstück; und Bekleidung für Wassersport.

10. Verfahren zur Herstellung eines Funktionsartikels umfassend eine wasserdichte atmungsaktive Polymer-Membran gemäß einem der Ansprüche 1 bis 7, umfassend:
a) Erzeugen einer Polymer-Lösung (L3), wobei die Lösung mindestens ein thermoplastisches Polymer enthält;
b) Eintauchen eines Formkörpers in die Lösung L3 gemäß (a), wobei die Gestalt des Formkörpers bevorzugt der Gestalt des Funktionsartikels entspricht, unter Erhalt eines mit Polymer-Lösung überzogenen Formkörpers;
c) Erwärmen des mit Polymer-Lösung überzogenen Formkörpers gemäß (b) unter Erhalt einer Polymer-Membran auf der Oberfläche des Formkörpers durch Koagulation des thermoplastischen Polymers;
wobei der Funktionsartikel ausgewählt ist aus der Gruppe bestehend aus Funktionsbekleidungsstück; Funktionsschuh; Funktionsgegenstand, ausgewählt aus der Gruppe bestehend aus Tasche, Rucksack oder Zelt; Badebekleidungsstück; und Bekleidung für Wassersport.

11. Funktionsartikel, erhalten oder erhältlich nach dem Verfahren gemäß einem der Ansprüche 8 bis 10; wobei der Funktionsartikel ausgewählt ist aus der Gruppe bestehend aus Funktionsbekleidungsstück; Funktionsschuh; Funktionsgegenstand, ausgewählt aus der Gruppe bestehend aus Tasche, Rucksack oder Zelt; Badebekleidungsstück; und Bekleidung für Wassersport.

12. Verwendung einer wasserdichten atmungsaktiven Polymer-Membran gemäß einem der Ansprüche 1 bis 7 zur Herstellung eines Funktionsartikels, wobei der Funktionsartikel ausgewählt ist aus der Gruppe bestehend aus Funktionsbekleidungsstück; Funktionsschuh; Funktionsgegenstand, ausgewählt aus der Gruppe bestehend aus Tasche, Rucksack oder Zelt; Badebekleidungsstück; und Bekleidung für Wassersport.

## Claims

1. A functional article comprising a waterproof breathable polymer membrane, where the functional article consists of the waterproof breathable polymer membrane and where the functional article has no other layer; where the functional article is selected from the group consisting of functional clothing item; functional footwear item; functional object selected from the group consisting of bag, backpack or tent; swimwear item; and clothing for water sport, where the polymer membrane has an elongation at break of more than 100% as measured to DIN 53504; where the polymer membrane is generated from a solution (L1) comprising at least one thermoplastic polymer and at least one additive selected from the group consisting of mono-, di- and trialkanols which have no other functional groups by formation of a film from the solution (L1) and contacting of the film with a mixture (L2) comprising a coagulant selected from the group of liquid water, water vapor, alcohols or mixtures thereof, and has pores having a mean pore diameter in the range from 0.001 µm to 0.8 µm, determined by Hg porosimetry according to DIN 66133; and where the polymer membrane comprises at least one thermoplastic polymer selected from the group consisting of polyurethane, polyester, polyetherester, polyesterester, polyamide, polyetheramide, polybutadiene-styrene and ethylenevinyl acetate.

2. The functional article according to claim 1, where the functional article has no stitch seam.

3. The functional article according to claim 1 or 2, where the polymer membrane has an elongation at break of more than 150%, preferably more than 200%, as measured to DIN 53504.

4. The functional article according to any of claims 1 to 3, where the polymer membrane has an absolute water vapor transmission rate (WVTR_{abs.}) at 38°C and 90% relative humidity in accordance with DIN 53122 of more than 1000 [g/m^{2*}d].

5. The functional article according to any of claims 1 to 4, where the polymer membrane has a water penetration resistance (LEP) of more than 1 bar, preferably in the range from 2 to 5 bar, more preferably in the range from 3 to 4 bar, as determined to DIN EN 20811.

6. The functional article according to any of claims 1 to 5, where the polymer membrane comprises at least one thermoplastic polymer selected from the group consisting of thermoplastic polyurethane (TPU); polyamide, more particularly polyamide 11 (PA11), polyamide 12 (PA12), polyamide 6-636 (PA6-636) and polyamide copolymer; and polyester, more particularly biodegradeable polyester (Ecoflex); preferably TPU.

7. The functional article according to any of claims 1 to 6, where the polymer membrane comprises at least one TPU, the TPU being based on the following components:
- 11 to 79 weight% of a mixture of at least one diol (D1) and at least one isocyanate (I1),
- 21 to 89 weight% of at least one compound (C1) having at least two isocyanate-reactive groups.

8. A method for producing a functional article comprising a waterproof breathable polymer membrane according to any of claims 1 to 7, which comprises:
i) generating segments of the polymer membrane which have a suitable shape;
ii) joining the segments as per (i) by adhesive bonding or welding;
where the functional article is selected from the group consisting of functional clothing item;
functional footwear item; functional object selected from the group consisting of bag, backpack or tent; swimwear item; and clothing for water sport.

9. A method for producing a functional article comprising a waterproof breathable polymer membrane according to any of claims 1 to 7, which comprises:
a) generating a tubular membrane from the polymer membrane;
b) applying the tubular membrane as per (a) to an optionally expandable or inflatable mold whose form corresponds preferably to the form of the functional article;
c) shaping the tubular membrane by supplying water vapor;
where the functional article is selected from the group consisting of functional clothing item;
functional footwear item; functional object selected from the group consisting of bag, backpack or tent; swimwear item; and clothing for water sport.

10. A method for producing a functional article comprising a waterproof breathable polymer membrane according to any of claims 1 to 7, which comprises:
a) generating a polymer solution (L3), the solution containing at least one thermoplastic polymer;
b) immersing a shaped body into the solution L3 as per (a), the form of the shaped body corresponding preferably to the form of the functional article, to give a shaped body coated with polymer solution;
c) heating the shaped body coated with polymer solution as per (b), to give a polymer membrane on the surface of the shaped body by coagulation of the thermoplastic polymer;
where the functional article is selected from the group consisting of functional clothing item;
functional footwear item; functional object selected from the group consisting of bag, backpack or tent; swimwear item; and clothing for water sport.

11. A functional article obtained or obtainable by the method according to any of claims 8 to 10; where the functional article is selected from the group consisting of functional clothing item; functional footwear item; functional object selected from the group consisting of bag, backpack or tent; swimwear item; and clothing for water sport.

12. The use of a waterproof breathable polymer membrane according to any of claims 1 to 7 for producing a functional article, wherein the functional article is selected from the group consisting of functional clothing item; functional footwear item; functional object selected from the group consisting of bag, backpack or tent; swimwear item; and clothing for water sport.

## Revendications

1. Article fonctionnel comprenant une membrane polymère étanche à l'eau, respirante, l'article fonctionnel étant constitué par la membrane polymère étanche à l'eau, respirante et l'article fonctionnel ne présentant pas d'autres couches ; l'article fonctionnel étant choisi dans le groupe constitué par un article vestimentaire fonctionnel ; une chaussure fonctionnelle ; un objet fonctionnel, choisi dans le groupe constitué par un sac, un sac à dos ou une tente ; un costume de bain ; et un vêtement pour le sport aquatique, la membrane polymère présentant un allongement à la déchirure supérieur à 100%, mesuré selon la norme DIN 53504 ; la membrane polymère étant fabriquée à partir d'une solution (L1) comprenant au moins un polymère thermoplastique et au moins un additif, choisi dans le groupe constitué par les monoalcanols, les dialcanols et les trialcanols, qui ne présentent pas d'autres groupes fonctionnels, par formation d'un film à partir de la solution (L1) et mise en contact du film avec un mélange (L2) comprenant un coagulant choisi dans le groupe constitué par l'eau liquide, la vapeur d'eau, les alcools ou leurs mélanges et présentant des pores présentant un diamètre moyen de pore dans la plage de 0,001 µm à 0,8 µm, déterminé par porosimétrie au Hg selon la norme DIN 66133 ; et la membrane polymère comprenant au moins un polymère thermoplastique choisi dans le groupe constitué par le polyuréthane, le polyester, le polyétherester, le polyesterester, le polyamide, le polyesteramide, le polybutadiène-styrène et l'éthylène-acétate de vinyle.

2. Article fonctionnel selon la revendication 1, l'article fonctionnel ne présentant pas de couture cousue.

3. Article fonctionnel selon la revendication 1 ou 2, la membrane polymère présentant un allongement à la rupture supérieur à 150%, de préférence supérieur à 200%, mesuré selon la norme DIN 53504.

4. Article fonctionnel selon l'une quelconque des revendications 1 à 3, la membrane polymère présentant une perméabilité absolue à la vapeur d'eau (PVE_{abs}) à 38°C et à une humidité relative de l'air de 90%, selon la norme DIN 53122, supérieure à 1000 [g/m²*j].

5. Article fonctionnel selon l'une quelconque des revendications 1 à 4, la membrane polymère présentant une étanchéité à l'eau (LEP - liquid entry pressure - pression d'entrée de liquide) supérieure à 1 bar, de préférence dans la plage de 2 à 5 bars, plus préférablement dans la plage de 3 à 4 bars, déterminée selon la norme DIN EN 20811.

6. Article fonctionnel selon l'une quelconque des revendications 1 à 5, la membrane polymère comprenant au moins un polymère thermoplastique, choisi dans le groupe constitué par le polyuréthane thermoplastique (TPU) ; le polyamide, en particulier le polyamide 11 (PA11), le polyamide 12 (PA12), le polyamide 6-636 (PA6-636) et un copolymère de polyamide ; et le polyester, en particulier le polyester biodégradable (Ecoflex) ; de préférence le TPU.

7. Article fonctionnel selon l'une quelconque des revendications 1 à 6, la membrane polymère comprenant au moins un TPU, le TPU étant basé sur les composants suivants :
- 11 à 79% en poids d'un mélange d'au moins un diol (D1) et d'au moins un isocyanate (I1),
- 21 à 89% en poids d'au moins un composé (C1) présentant au moins deux groupes réactifs par rapport à isocyanate.

8. Procédé pour la fabrication d'un article fonctionnel comprenant une membrane polymère étanche à l'eau, respirante, selon l'une quelconque des revendications 1 à 7, comprenant :
i) la fabrication de segments de la membrane polymère, qui présentent une forme appropriée ;
ii) l'assemblage des segments selon (i) par collage ou soudure ;
l'article fonctionnel étant choisi dans le groupe constitué par un article vestimentaire fonctionnel ; une chaussure fonctionnelle ; un objet fonctionnel choisi dans le groupe constitué par un sac, un sac à dos ou une tente ; un costume de bain ; et un vêtement pour le sport aquatique.

9. Procédé pour la fabrication d'un article fonctionnel comprenant une membrane polymère étanche à l'eau, respirante, selon l'une quelconque des revendications 1 à 7, comprenant :
a) la fabrication d'une membrane tubulaire à partir de la membrane polymère ;
b) l'application de la membrane tubulaire selon (a) sur un moule, éventuellement expansible ou gonflable, dont la forme correspond de préférence à la forme de l'article fonctionnel ;
c) la mise en forme de la membrane tubulaire par apport de vapeur d'eau ;
l'article fonctionnel étant choisi dans le groupe constitué par un article vestimentaire fonctionnel ; une chaussure fonctionnelle ; un objet fonctionnel choisi dans le groupe constitué par un sac, un sac à dos ou une tente ; un costume de bain ; et un vêtement pour le sport aquatique.

10. Procédé pour la fabrication d'un article fonctionnel comprenant une membrane polymère étanche à l'eau, respirante, selon l'une quelconque des revendications 1 à 7, comprenant :
a) la préparation d'une solution polymère (L3), la solution contenant au moins un polymère thermoplastique ;
b) l'immersion d'un corps moulé dans la solution L3 selon (a), la forme du corps moulé correspondant de préférence à la forme de l'article fonctionnel, avec obtention d'un corps moulé enrobé de la solution polymère ;
c) chauffage du corps moulé enrobé de la solution polymère selon (b) avec obtention d'une membrane polymère sur la surface du corps moulé par coagulation du polymère thermoplastique ;
l'article fonctionnel étant choisi dans le groupe constitué par un article vestimentaire fonctionnel ; une chaussure fonctionnelle ; un objet fonctionnel choisi dans le groupe constitué par un sac, un sac à dos ou une tente ; un costume de bain ; et un vêtement pour le sport aquatique.

11. Article fonctionnel, obtenu ou pouvant être obtenu selon le procédé selon l'une quelconque des revendications 8 à 10 ; l'article fonctionnel étant choisi dans le groupe constitué par un article vestimentaire fonctionnel ; une chaussure fonctionnelle ; un objet fonctionnel choisi dans le groupe constitué par un sac, un sac à dos ou une tente ; un costume de bain ; et un vêtement pour le sport aquatique.

12. Utilisation d'une membrane polymère étanche à l'eau, respirante, selon l'une quelconque des revendications 1 à 7 pour la fabrication d'un article fonctionnel, l'article fonctionnel étant choisi dans le groupe constitué par un article vestimentaire fonctionnel ; une chaussure fonctionnelle ; un objet fonctionnel choisi dans le groupe constitué par un sac, un sac à dos ou une tente ; un costume de bain ; et un vêtement pour le sport aquatique.
